# EUROPEAN PATENT SPECIFICATION

(11) **EP 2 075 799 B1**
(45) Date of publication and mention of the grant of the patent: **29.08.2012**
(21) Application number: 09002604.8
(22) Date of filing: 18.03.2005
(51) Int. Cl.: G21C 19/06, G21F 5/00, G21F 9/36, G21F 7/015, G21F 9/34, G21F 9/24

(54) **Systems and methods for storing high level radioactive waste**
Systeme und Verfahren zum Lagern von hochradioaktivem Abfall
Systèmes et procédés pour le stockage de déchets radioactifs à activité élevée

(30) Priority: 18.03.2004 US 803620; 10.02.2005 US 54869; 10.02.2005 US 54897; 10.02.2005 US 54898
(43) Date of publication of application: 01.07.2009
(62) Divisional of application: 05251655.6
(73) Proprietor: Holtec International, Inc., Marlton, NJ 08053 (US)
(72) Inventor: Singh, Krishna, P., Palm Harbor Florida 34683 (US)
(74) Representative: Bassil, Nicholas Charles

(56) References cited:
- DE-A1- 2 821 780
- DE-A1- 3 107 158
- DE-A1- 3 151 475
- US-A- 4 834 916
- US-B1- 6 519 307

## Description

### Cross-Reference to Related Applications

The present application claims priority to United States Patent Application 11/054,869, filed February 10, 2005, United States Patent Application 11/054,897, filed February 10, 2005, United States Patent Application 11/054,898, filed February 10, 2005, all of which claim priority to United States Patent Application 10/803,620, filed March 18, 2004.

### Field of the Invention

The present invention related generally to the field of storing high level radioactive waste, and specifically to systems and methods for storing high level radioactive waste, such as spent nuclear fuel, in ventilated vertical modules.

### Background of the Invention

In the operation of nuclear reactors, it is customary to remove fuel assemblies after their energy has been depleted down to a predetermined level. Upon removal, this spent nuclear fuel is still highly radioactive and produces considerable heat, requiring that great care be taken in its packaging, transporting, and storing. In order to protect the environment from radiation exposure, spent nuclear fuel is first placed in a canister. The loaded canister is then transported and stored in large cylindrical containers called casks. A transfer cask is used to transport spent nuclear fuel from location to location while a storage cask is used to store spent nuclear fuel for a determined period of time.

In a typical nuclear power plant, an open empty canister is first placed in an open transfer cask. The transfer cask and empty canister are then submerged in a pool of water. Spent nuclear fuel is loaded into the canister while the canister and transfer cask remain submerged in the pool of water. Once fully loaded with spent nuclear fuel, a lid is typically placed atop the canister while in the pool.. The transfer cask and canister are then removed from the pool of water, the lid of the canister is welded thereon and a lid is installed on the transfer cask. The canister is then properly dewatered and filled with inert gas. The transfer cask (which is holding the loaded canister) is then transported to a location where a storage cask is located. The loaded canister is then transferred from the transfer cask to the storage cask for long term storage. During transfer from the transfer cask to the storage cask, it is imperative that the loaded canister is not exposed to the environment.

One type of storage cask is a ventilated vertical overpack ("VVO"). A VVO is a massive structure made principally from steel and concrete and is used to store a canister loaded with spent nuclear fuel. VVOs stand above ground and are typically cylindrical in shape and extremely heavy, weighing over 150 tons and often having a height greater than 4.8 metres (16 feet). VVOs typically have a flat bottom, a cylindrical body having a cavity to receive a canister of spent nuclear fuel, and a removable top lid.

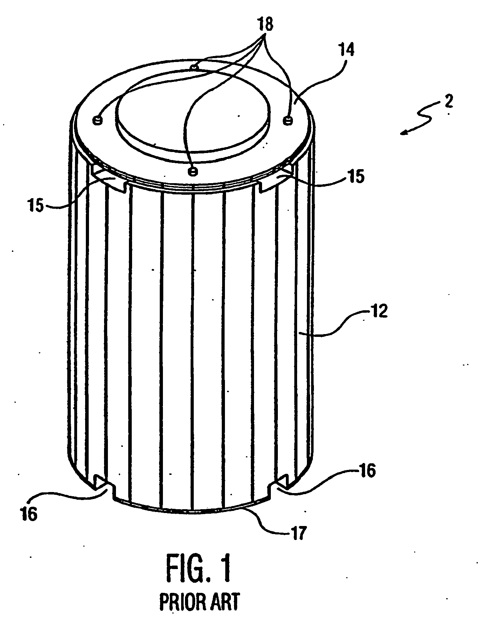

In using a WO to store spent nuclear fuel, a canister loaded with spent nuclear fuel is placed in the cavity of the cylindrical body of the VVO. Because the spent nuclear fuel is still producing a considerable amount of heat when it is placed in the VVO for storage, it is necessary that this heat energy have a means to escape from the VVO cavity. This heat energy is removed from the outside surface of the canister by ventilating the VVO cavity. In ventilating the VVO cavity, cool air enters the WO chamber through bottom ventilation ducts, flows upward past the loaded canister, and exits the VVO at an elevated temperature through top ventilation ducts. The bottom and top ventilation ducts of existing VVOs are located circumferentially near the bottom and top of the VVO's cylindrical body respectively, as illustrated in FIG. 1.

While it is necessary that the VVO cavity be vented so that heat can escape from the canister, it is also imperative that the VVO provide adequate radiation shielding and that the spent nuclear fuel not be directly exposed to the external environment. The inlet duct located near the bottom of the overpack is a particularly vulnerable source of radiation exposure to security and surveillance personnel who, in order to monitor the loaded overpacks, must place themselves in close vicinity of the ducts for short durations.

Additionally, when a canister loaded with spent nuclear fuel is transferred from a transfer cask to a storage VVO, the transfer cask is stacked atop the storage VVO so that the canister can be lowered into the storage VVO's cavity. Most casks are very large structures and can weigh up to 250,000 lbs. and have a height of 4.8 metres (16 ft). or more. Stacking a transfer cask atop a storage VVO/cask requires a lot of space, a large overhead crane, and possibly a restraint system for stabilization. Often, such space is not available inside a nuclear power plant. Finally, above ground storage VVOs stand at least 4.8 metres (16 feet) above ground, thus, presenting a sizable target of attack to a terrorist.

FIG. 1 illustrates a traditional prior art VVO **2.** Prior art VVO **2** comprises flat bottom **17,** cylindrical body **12,** and lid **14.** Lid **14** is secured to cylindrical body **12** by bolts **18.** Bolts **18** serve to restrain separation of lid **14** from body **12** if prior art VVO **2** were to tip over. Cylindrical body **12** has top ventilation ducts **15** and bottom ventilation ducts **16.** Top ventilation ducts **15** are located at or near the top of cylindrical body **12** while bottom ventilation ducts **16** are located at or near the bottom of cylindrical body **12.** Both bottom ventilation ducts **16** and top ventilation ducts **15** are located around the circumference of the cylindrical body **12.** The entirety of prior art VVO **2** is positioned above grade.

### Disclosure of the Present Invention

It is an object of the present invention to provide a system and method for storing high level radioactive waste, such as spent nuclear fuel, that reduces the height of the stack assembly when a transfer cask is stacked atop a storage VVO.

It is another object of the present invention to provide a system and method for storing high level radioactive waste, such as spent nuclear fuel, that requires less vertical space.

Yet another object of the present invention is to provide a system and method for storing high level radioactive waste, such as spent nuclear fuel, that utilizes the radiation shielding properties of the subgrade during storage while providing adequate ventilation of the high level radioactive waste.

A further object of the present invention is to provide a system and method for storing high level radioactive waste, such as spent nuclear fuel, that provides the same or greater level of operational safeguards that are available inside a fully certified nuclear power plant structure.

A still further object of the present invention is to provide a system and method for storing high level radioactive waste, such as spent nuclear fuel, that decreases the dangers presented by earthquakes and other catastrophic events and virtually eliminates the potential damage from a World Trade Center or Pentagon type of attack on the stored canister.

It is also an object of the present invention to provide a system and method for storing high level radioactive waste, such as spent nuclear fuel, that allows an ergonomic transfer of the high level radioactive waste from a transfer cask to a storage VVO.

Another object of the present invention is to provide a system and method for storing high level radioactive waste, such as spent nuclear fuel, below grade.

Yet another object of the present invention is to provide a system and method of storing high level radioactive waste, such as spent nuclear fuel, that reduces the amount of radiation emitted to the environment.

Still another object of the present invention is to provide a system and method of storing high level radioactive waste, such as spent nuclear fuel, that affords adequate heat removal capabilities from a stored canister during flood conditions, including "smart flood" conditions.

These and other objects are met by the present invention which in one aspect is a system for storing high level radioactive waste comprising: a body having a cavity for receiving and storing a high level radioactive waste canister, a portion of the body positioned below grade; the body having at least one inlet ventilation duct extending from an above grade inlet to a below grade outlet in the cavity. By providing an inlet ventilation duct in the body that extends from above grade to the cavity at a point below grade, the radiation shielding properties of the subgrade can be utilized for the high level radioactive waste canister without obstructing the ventilation of the canister in the cavity with ambient air. When loaded with a hot high level radioactive waste, cool ambient air will enter the above grade inlet, travel through the inlet ventilation duct, and enter the cavity preferably, at or near its bottom. Heat from the high level radioactive waste will warm the cool air causing it to rise within the cavity. The heated air will then exit the cavity via an outlet ventilation duct located in either a lid or in an above grade opening in the body. Thus, below grade storage of the high level radioactive waste canister is facilitated while affording adequate heat ventilation for the high level radioactive waste.

Preferably, the above grade inlet of the inlet ventilation duct is in a side wall of the body. When the above grade inlet is in the side wall of the body, the inlet ventilation duct can be an elongated substantially S-shape. In order to provide sufficient ventilation, it is preferred that two inlet ventilation ducts be provided in the body in opposing side walls of the body. Vent screens are preferably provided to cover the above grade inlets of the inlet ventilation ducts.

The body is preferably constructed of concrete and the cavity and the ventilation duct can be insulated from the concrete body to both prevent the body from becoming heated beyond FSAR limits and to prevent the cold air entering the inlet ventilation duct from becoming heated before it enters the cavity. The inlet ventilation duct and the cavity are preferably built to be an integral piece that is hermetically sealed, preventing the ingress of below grade liquids. This reduces the possibility of corrosion of the internals of the cavity. In this embodiment, a steel shell can be provided to line the cavity and the inlet ventilation duct can be constructed of a steel lining. The shell and the inlet ventilation duct can then be welded together to achieve the hermetic seal. A bottom plate that is also integral to the shell and the inlet ventilation duct can be provided below the cavity. The system can also comprise a base on which the body is positioned, such as a reinforced concrete slab.

The system can also have support blocks located on the bottom/floor of the cavity. Preferably, these support blocks will be circumferentially spaced apart and provide an inlet air plenum between a canister of high level radioactive waste and the bottom surface of the cavity when the canister is placed in the cavity for storage. The existence of the inlet air plenum will help facilitate optimal ventilation of the cavity. The support blocks can be made of low carbon steel. As discussed below, in some aspects of the invention, the relative height between the support blocks and the below grade outlet (i.e. the opening) of the inlet ventilation duct into the cavity will protect against overheating during flood conditions.

During the storage of a high level radioactive waste, the system will preferably further comprise a lid positioned atop the body and covering the cavity. Preferably, when a high level radioactive waste canister is positioned in the cavity and the lid is placed atop the body enclosing the cavity, an outlet air plenum exists between the canister and the lid. It is also preferable that the lid comprises a shear ring that protrudes into the cavity when the lid is positioned atop the body. The shear ring provides enormous shear resistance against lateral forces from earthquakes, impactive missiles, or other projectiles, thus, maintaining the radiation shielding integrity of the system.

The lid also preferably comprises at least one outlet ventilation duct for allowing heated air to exit the cavity. This outlet ventilation duct can be, for example, a horizontal passageway in a side wall of the lid. In this embodiment, the outlet ventilation ducts in the lid are circumferentially and azimuthally separated from the above grade inlet of the inlet ventilation ducts in the body. This helps prevent the heated air that exits the cavity via the lid from being drawn back into the inlet ventilation ducts in the body and back into the cavity. In other embodiments, the outlet ventilation ducts can be located in the body of the VVO itself.

It is preferred that a major portion of the body be positioned below grade, and more preferably that the body extend approximately less than 1.1 metres (42 inches) above grade. It is also preferred that a major portion of the cavity's height be below grade so that when a high level radioactive waste canister is lowered into the cavity, at least a major portion of the canister is below grade. Most preferably, the entirety of the canister will be below grade during storage.

In another aspect, the invention is a method of storing high level radioactive waste comprising: providing the system described above and having at least one outlet ventilation duct; lowering a high level radioactive waste into the cavity so that a major portion of the canister is below grade; and placing a lid atop the body so as to enclose the cavity; wherein ventilation of the canister is provided by cold air entering the cavity through the inlet ventilation duct in the body, the cold air being heated within the cavity by the high level radioactive waste, and warm air exiting the cavity through the outlet ventilation duct. The system used to perform the method of the present invention can contain any of the design particulars discussed above.

In yet another aspect, the invention is a system for storing high level radioactive waste comprising: a body having a cavity for receiving and storing a high level radioactive waste canister, the cavity having a top, a bottom, and a bottom surface; at least one inlet ventilation duct forming a passageway from an ambient air inlet to an outlet at or near the bottom the cavity; at least one outlet ventilation duct forming a passageway from at or near the top of the cavity to ambient air; and means to support a high level radioactive waste canister in the cavity so that an air plenum is created between a bottom of the canister of high level radioactive waste and the bottom surface of the cavity; the support means supporting the high level radioactive waste canister in the cavity so that a bottom of the canister is lower than a top of the outlet. Preferably, the support means supports the high level radioactive waste canister in the cavity so that the bottom of the canister is at least 5.1 cm (two inches) below the top of the outlet.

In this aspect of the invention, the body of the VVO can be entirely or partially above grade. In an embodiment where at least a portion of the body is positioned below grade, the ambient air inlet of the inlet ventilation duct can be above grade while the outlet of the inlet ventilation duct is below grade.

In an embodiment of this aspect of the invention where the entirety of the body is above grade, both the ambient air inlet and the outlet of the inlet ventilation duct can be above grade. In this embodiment, the inlet ventilation duct will be shaped so that a line of sight does not exist to a canister supported by the support means from the ambient air inlet. For example, the inlet ventilation duct can comprise a portion that is L-shaped, angled, S-shaped, or curved. This is done to prevent the radiation emitted by the canister from "shining" into the surrounding environment.

In still another aspect, the invention is a system for storing high level radioactive waste comprising: a shell forming a cavity for receiving a canister of high level radioactive waste, at least a portion of the shell positioned below grade; and at least one inlet ventilation duct extending from an above grade inlet to a below grade outlet at or near a bottom of the cavity; the inlet ventilation duct connected to the shell so that the cavity is hermetically sealed to ingress of below grade fluids.

In a still further aspect, the invention is a method of storing high level radioactive waste comprising: providing a below grade hole; providing a system comprising a shell forming a cavity for receiving a canister of high level radioactive waste, at least a portion of the shell positioned below grade, and at least one inlet ventilation duct extending from an inlet to an outlet at or near a bottom of the cavity, the inlet ventilation duct connected to the shell; positioning the apparatus in the hole so the inlet of the inlet ventilation duct is above grade and the outlet of the inlet ventilation duct into the cavity is below grade; filling the hole with engineered fill; and lowering a high level radioactive waste canister into the cavity.

In another aspect, the invention is a system for storing high level radioactive waste comprising: a shell forming a cavity for receiving a canister of high level radioactive waste, at least a portion of the shell positioned below grade; and at least one ventilation duct forming a passageway from at or near the top of the cavity to an ambient atmosphere; wherein the cavity is hermetically sealed to ingress of below grade fluids.

In a further aspect, the invention is a method of storing low heat high level radioactive waste comprising: providing a system comprising a shell forming a cavity for receiving a canister of high level radioactive waste, at least a portion of the shell positioned below grade, and at least one ventilation duct forming a passageway from at or near the top of the cavity to an ambient atmosphere; wherein the cavity is hermetically sealed to ingress of below grade fluids; and lowering a canister of low heat high level radioactive waste into the cavity until at least a major portion of the canister is below grade.

The invention will be described below with respect to systems and methods for storing spent nuclear fuel with the understanding that the invention is not limited to any specific type of high level radioactive waste.

### Brief Description of the Drawings

Figure 1 is a top perspective view of a prior art VVO.

Figure 2 is a side cross sectional view of an underground VVO according to an embodiment of the present invention having a spent fuel canister positioned therein.

Figure 3 is a perspective view of the underground VVO of FIG. 2 removed from the ground.

Figure 4 is a bottom perspective view of an alternate embodiment of a lid to be used with the underground VVO of FIG. 2.

Figure 5 is a perspective view of an array of underground VVO's according to an embodiment of the present invention stored at an ISFSI.

Figure 6 is a side cross sectional view of area VI-VI of FIG. 2.

Figure 7 is a top view of the underground VVO of FIG. 2 removed from the ground and with the spent fuel canister removed from the cavity and the lid removed.

Figure 8A is a schematic cross-sectional view of an underground VVO according to an embodiment of the present invention having a first alternative configuration of the inlet and outlet ventilation ducts.

Figure 8B is a schematic cross-sectional view of an underground VVO according to an embodiment of the present invention having a second alternative configuration of the inlet and outlet ventilation ducts.

Figure 8C is a schematic cross-sectional view of an underground VVO according to an embodiment of the present invention having a third alternative configuration of the inlet and outlet ventilation ducts.

Figure 8D is a schematic cross-sectional view of an underground VVO according to an embodiment of the present invention wherein the body of the underground VVO is substantially flush with the ground.

Figure 8E is a schematic cross-sectional view of an underground VVO according to an embodiment of the present invention wherein the body of the underground VVO is substantially flush with the ground and having an alternative configuration of the inlet and outlet ventilation ducts.

Figure 9 is a top perspective view of an integral structure for storing spent nuclear fuel according to an embodiment of the present invention.

Figure 10 is a schematic of the integral structure of FIG. 9 lowered into a below grade hole and positioned atop a base.

Figure 11 is a schematic of the arrangement of FIG. 10 wherein the below grade hole is being filled with soil.

Figure 12 is a schematic illustrating the arrangement of FIG. 10 wherein the below grade hole is completely filled with soil.

Figure 13 is a schematic illustrating the arrangement of FIG. 12 wherein a spent fuel canister is loaded in the integral structure and a lid positioned thereon.

Figure 14 is a schematic view of an integral structure according to an embodiment of the present invention having an alternative configuration for the inlet and outlet ventilation ducts.

Figure 15 is a schematic view of an integral structure for storing low heat spent fuel according to an embodiment of the present invention free of inlet ventilation ducts.

### Detailed Description of the Drawings

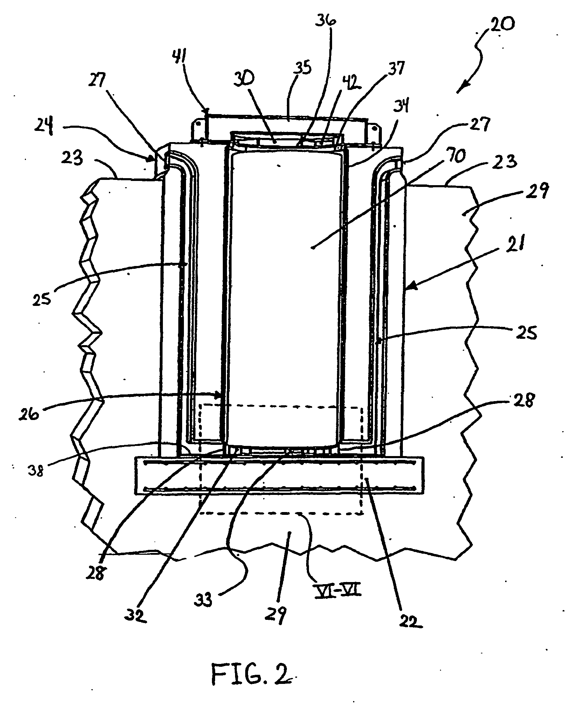

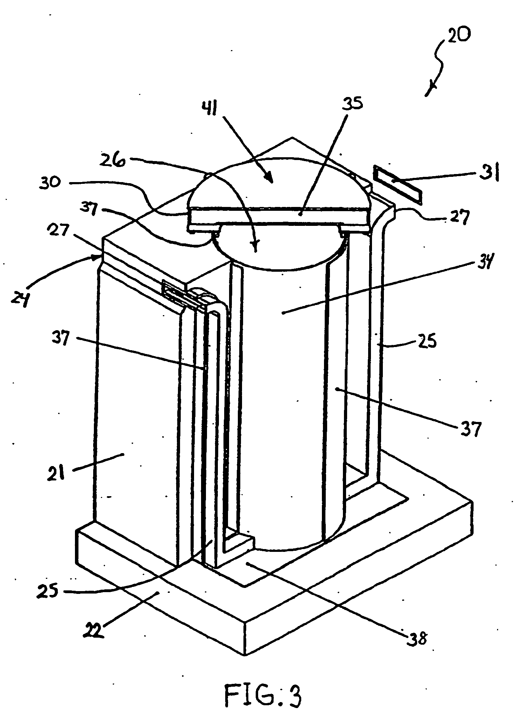

Referring to FIGS. 2 and 3, underground VVO 20 is illustrated according to a first embodiment of the present invention. Underground VVO 20 is a vertical, ventilated dry spent fuel storage system that is fully compatible with 100 ton and 125 ton transfer casks for spent fuel canister transfer operations. Underground VVO 20 can be modified/designed to be compatible with any size or style transfer cask. Underground VVO **20** is designed to accept spent fuel canisters for storage at an Independent Spent Fuel Storage Installation ("ISFSI") in lieu of above ground overpacks (such as prior art VVO **2** in FIG. 1). All spent fuel canister types engineered for storage in free-standing and anchored overpack models can be stored in underground VVO **20.**

As used herein the term "canister" broadly includes any spent fuel containment apparatus, including, without limitation, multi-purpose canisters and thermally conductive casks. For example, in some areas of the world, spent fuel is transferred and stored in metal casks having a honeycomb grid-work/basket built directly into the metal cask. Such casks and similar containment apparatus qualify as canisters, as that term is used herein, and can be used in conjunction with underground VVO **20** as discussed below

Underground VVO **20** comprises body **21,** base **22,** and removable lid **41**. Body **21** is constructed of concrete, but can be constructed of other suitable materials. Body **21** is rectangular in shape but can be any shape, such as for example, cylindrical, conical, spherical, semi-spherical, triangular, or irregular in shape. A portion of body **21** is positioned below grade so that only top portion **24** protrudes above grade level 23. Preferably, at least a major portion of the height of body **21** is positioned below grade. The exact height which top portion **24** of body 21 extends above ground level **23** can be varied greatly and will depend on a multitude of design considerations, such as canister dimensions, radioactivity levels of the spent fuel to be stored, ISFSI space limitations, geographic location considering susceptibility to missile-type and ground attacks, geographic location considering frequency of and susceptibility to natural disasters (such as earthquakes, floods, tornadoes, hurricanes, tsunamis, etc.), environmental conditions (such as temperature, precipitation levels), and/or ground water levels. Preferably, top portion **24** of body **21** is less than approximately 1.1 metres (42 inches) above ground level **23,** and most preferably approximately 15.2 to 91.4 cm (6 to 36 inches) above ground level **23.**

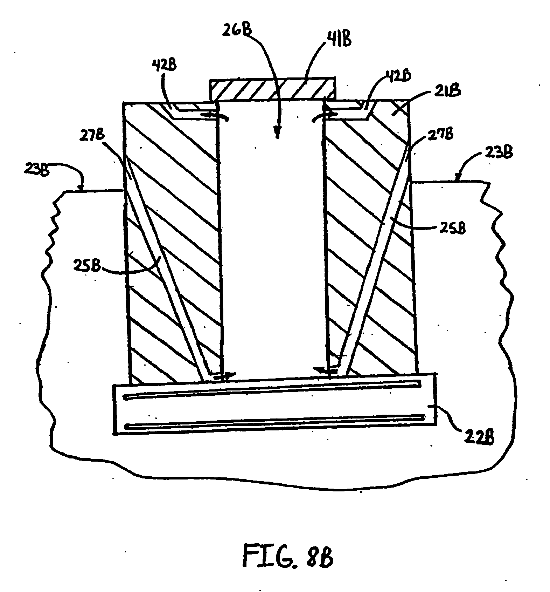

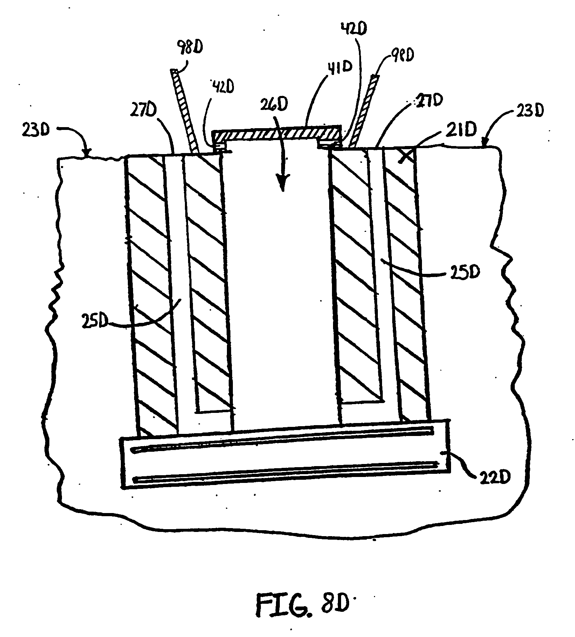

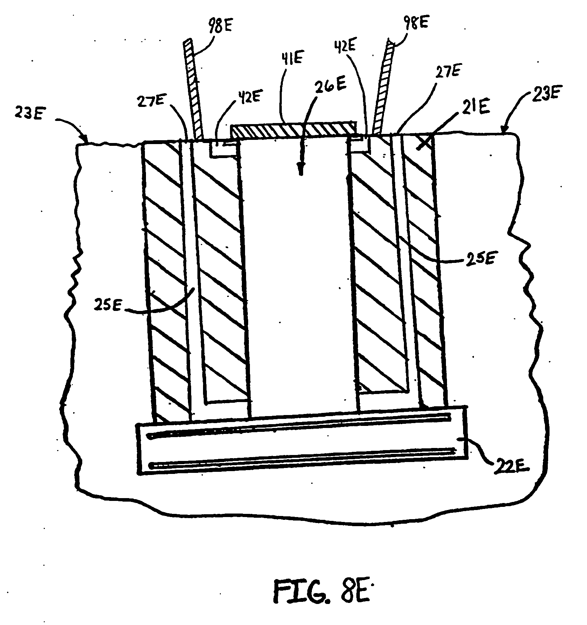

In some embodiments, it may even be preferable that the entire height of body **21** be below grade (illustrated in FIGS. 8D and 8E). As will be discussed in more detail below, when the entire height of body is below grade, only the top surface of the body will be exposed to the ambient air above grade.

Referring still to FIGS, 2 and 3, body **21** forms cylindrical cavity **26** therein (best shown in FIG. 3). While cavity **26** is cylindrical in shape, cavity **26** is not limited to any specific size, shape, and/or depth and can be designed to receive and store almost any shape of canister without departing from the spirit of the invention. While not necessary to practice the invention, it is preferred that the horizontal cross-sectional size and shape of cavity **26** be designed to generally correspond to the horizontal cross-sectional size and shape of the canister-type that is to be used in conjunction with that particular underground VVO. More specifically, it is desirable that the size and shape of cavity **26** be designed so that when a spent fuel canister (such as canister **70**) is positioned in cavity **26** for storage, a small clearance exists between the outer side walls of the canister and the side walls of cavity **26.**

Designing cavity **26** so that a small clearance is formed between the side walls of the stored canister and the side walls of cavity **26** limits the degree the canister can move within the cavity during a catastrophic event, thereby minimizing damage to the canister and the cavity walls and prohibiting the canister from tipping over within the cavity. This small clearance also facilitates flow of the heated air during spent nuclear fuel cooling. The exact size of the clearance can be controlled/designed to achieve the desired fluid flow dynamics and heat transfer capabilities for any given situation. In some embodiments, for example, the clearance may be 2.5 to 7.6 cm (1 to 3 inches). A small clearance also reduces radiation streaming.

Two inlet ventilation ducts **25** are provided in body **21** for providing inlet ventilation to the bottom of cavity **26.** Inlet ventilation ducts **25** are elongated substantially S-shaped passageways extending from above grade inlets **27** to below grade outlets **28.** Above grade inlets **27** are located on opposing side walls of top portion **24** of body **21** and open to the ambient air above ground level **23.** As use herein, the terms ambient air, ambient atmosphere, or outside atmosphere, refer to the atmosphere/air external to the underground VVO, and include the natural outside environment and spaces within buildings, tents, caves, tunnels, or other man-made or natural enclosures.

Below grade outlets **28** open into cavity **26** at or near its bottom at a position below the ground level **23.** Thus, inlet ventilation ducts **25** provide a passageway for the inlet of ambient air to the bottom of cavity **26,** despite the bottom of cavity **26** being well below grade. Vent screens **31** (FIG. 3) are provided to cover above grade inlets **27** so that objects and other debris can not enter and block the passageways of inlet ventilation ducts **25.** As a result of the elongated S-shape of inlet ventilation ducts **25,** above grade inlets **27** cease to be a location of elevated dose rate that is common in free-standing above ground VVOs. While below grade outlets **28** are illustrated as being opening near the bottom of the walls of cavity **26,** below grade outlets **28** can be located in the floor of cavity **26** is desired. This can be accomplished by appropriately reshaping inlet ventilation ducts **25** and forming an opening through bottom plate **38** and into cavity **26.** In such an embodiment, base **22** can be considered part of the body **21** through which the inlet ventilation ducts **25** extend.

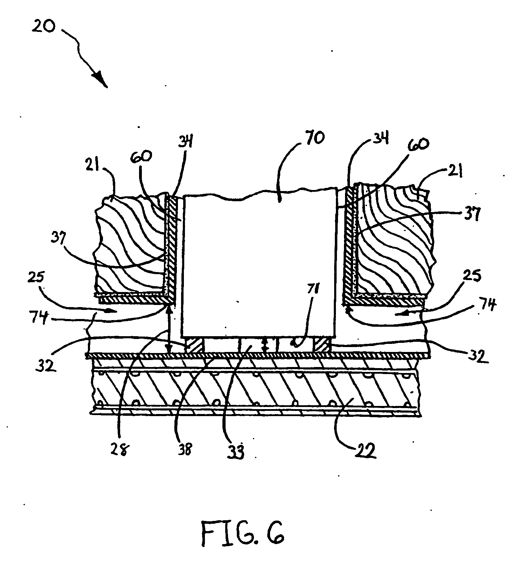

Above grade inlets **27** are located in the side walls of body **21** at an elevation of about 25.4 cm (10 inches) above ground level **23.** However, the elevation of above grade inlets **27** is not limiting of the present invention. The inlets **27** can be located at any desired elevation above the ground level, including level/flush therewith, as shown in FIGS. 8D and 8E. Elevating above grade inlets **27** substantially above the ground level **23** helps reduce the likelihood that rain or flood water will enter the cavity **26.** It is noted that for IFSI's in flood zones, floodwater can possibly rise more than a foot above ground level and, thus, enter cavity **26** via inlet ventilation ducts **25.** However, as discussed below with respect to FIG. 6, underground WO **20** is specifically designed to deal with the worst flood conditions in a safe and effective manner.

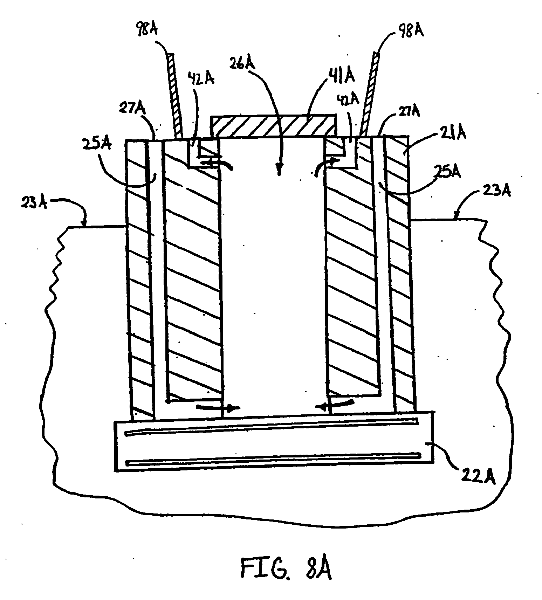

While above grade inlets **27** are preferably located in the side walls of body **21,** the above grade inlets are not limited to such a location and, if desired, can be located anywhere on the body, including for example in the top surface (or any other surface) of the body. Further examples of possible locations for above grade inlets **27** on body **21** are illustrated in FIGS. 8A-8E.

Referring still to FIGS. 2 and 3, inlet ventilation ducts **25** have a rectangular cross-sectional area of about 15.2 to 101.6 cm (6 inches by 40 inches). However, any cross-sectional shape and/or size can be used, such as for example, round, elliptical, triangular, hexagonal, octagonal, etc. Additionally, while the shape of inlet ventilation ducts **25** is an elongated substantially S-shaped passageway, a multitude of shapes can be used that still achieve acceptable dose rates at the above grade inlets **27.** For example, rather than an elongated S-shape, the inlet ventilation duct can extend from the above grade inlet to the below grade outlet in a zig-zag shape, a tilted linear shape, a general L-shape, or any angular, linear, or curved combination. The exact shape, size, and cross-sectional configuration of the inlet ventilation duct is a matter of design preference and will be dictated by such factors, such as thickness of the body of the WO, radioactivity level of the spent fuel being stored in the cavity, temperature of the spent fuel canister, desired fluid flow dynamics through the ducts, and placement of the above grade inlet vents on the body (i.e., whether the above grade inlet vents/opening are located on the side walls of the body, its top surface, or some other surface of the body). Further examples of possible shapes for inlet ventilation ducts **25** are illustrated in FIGS. 8A-8E.

Inlet ventilation ducts **25** are preferably formed by a low carbon steel liner. However, inlet ventilation ducts **25** can be made of any material or can be mere passageways formed into concrete body **21** without a lining.

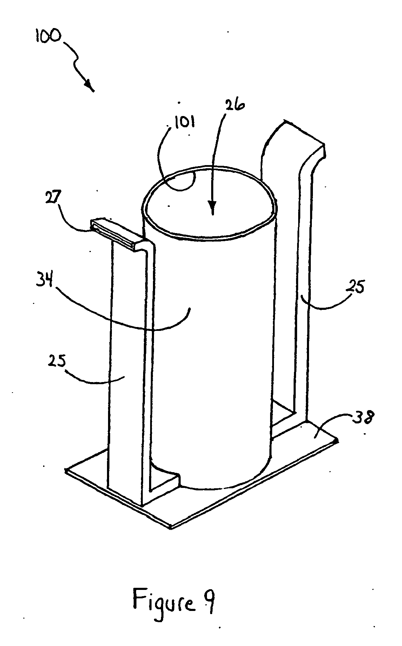

As best illustrated in FIG. 3, cavity **26** is formed by thick steel shell **34** and bottom plate **38.** Shell **34,** bottom plate **38,** and inlet ventilation ducts **25** are preferably made of a metal, such as low carbon steel, but can be made of other materials, such as stainless steel, aluminum, aluminum-alloys, plastics, and the like. Inlet ventilation ducts **25** are seal joined to shell **34** and bottom plate **38** to form an integral/unitary structure **100** (shown in isolation in FIG. 9) that is hermetically sealed to the ingress of below grade water and other fluids. In the case of weldable metals, this seal joining may comprise welding or the use of gaskets. Thus, the only way water or other fluids can enter cavity **26** is through above grade inlets **27** or outlet ventilation ducts **42** in lid **41.** As will be discussed below with respect to FIGS. 9-15, the integral structure itself is an invention and can be used to store spent nuclear fuel without the use of body **21.**

An appropriate preservative, such as a coal tar epoxy or the like, is applied to the exposed surfaces of shell **34,** bottom plate **38,** and inlet ventilation ducts **25** in order to ensure sealing, to decrease decay of the materials, and to protect against fire. A suitable coal tar epoxy is produced by Carboline Company out of St. Louis, Missouri under the tradename Bitumastic 300M. In some embodiments of the underground VVO of the present invention, a bottom plate will not be used.

Concrete body **21** surrounds shell **34** and inlet ventilation ducts **25.** Body **21** provides non-structural protection for shell **34** and inlet ventilation ducts **25.** Insulation **37** is provided at the interface between shell **34** and concrete body **21** and at the interface between inlet ventilation ducts **25** and concrete body **21.** Insulation **37** is provided to prevent excessive transmission of heat decay from spent fuel canister **70** to concrete body **21,** thus maintaining the bulk temperature of the concrete within FSAR limits. Insulating shell **34** and inlet ventilation ducts **25** from concrete body **21** also serves to minimize the heat-up of the incoming cooling air before it enters cavity **26.** Suitable forms of insulation include, without limitation, blankets of alumina-silica fire clay (Kaowool Blanket), oxides of alimuna and silica (Kaowool S Blanket), alumina-silica-zirconia fiber (Cerablanket), and alumina-silica-chromia (Cerachrome Blanket).

Insulating inlet ventilation ducts **25** from the heat load of spent fuel in cavity **26** is very important in facilitating and maintaining adequate ventilation/cooling of the spent fuel. The insulating process can be achieved in a variety of ways, none of which are limiting of the present invention. For example, in addition to adding an insulating material to the exterior of the shell **34** and inlet ventilation ducts **25,** it is also possible to insulate inlet ventilation ducts **25** by providing a gap in concrete body **21** between cavity **26** and inlet ventilation ducts **25.** The gap may be filled with an inert gas or air if desired. Moreover, irrespective of the means used to provide the insulating effect, the insulating means is not limited to being positioned on the outside surfaces of shell **34** or inlet ventilation ducts **25** but can be positioned anywhere between cavity **26** and inlet ventilation ducts **25.**

Body **21,** along with the integral steel unit formed by bottom plate **38,** shell **34,** and ventilation ducts **25,** are placed atop base **22.** Base **22** is a reinforced concrete slab designed to satisfy the load combinations of recognized industry standards, such as, without limitation, ACI-349. Base **22** is rectangular in shape but can take on any shape necessary to support body **21,** such as round, elliptical, triangular, hexagonal, octagonal, irregularly shaped, etc. While using a base is preferable to achieve adequate load supporting requirements, situations can arise where using such a base may be unnecessary.

Referring back to FIG. 2, underground VVO **20** has a removable ventilated lid **41.** Lid **41** is positioned atop body **21,** thereby substantially enclosing cavity **26** so that radiation does not escape through the top of cavity **26** when canister **70** is positioned in cavity **26.** When lid **41** is placed atop body **21** and spent fuel canister **70** is positioned in cavity **26,** outlet air plenum **36** is formed between the top surface of canister **70** and lid **41.** Outlet air plenum **36** is preferably a minimum of 3 inches in height, but can be any desired height. The exact height will be dictated by design considerations such as desired fluid flow dynamics, canister height, VVO height, the depth of the cavity, canister heat load, etc.

Lid **41** has four outlet ventilation ducts **42.** Outlet ventilation ducts **42** form a passageway from the top of cavity **26** (specifically from outlet air plenum **36**) to the ambient air so that heated air can escape from cavity **26.** Outlet ventilation ducts **42** are horizontal passageways that extend through side wall **30** of lid **41.** However, the outlet ventilation ducts can be any shape or orientation, such as vertical, L-shaped, S-shaped, angular, curved, etc. Because outlet ventilation ducts **42** are located within lid **41** itself, the total height of body **21** is minimized.

Lid **41** comprises a roof **35** made of concrete. Roof **35** provides radiation shielding so that radiation does not escape from the top of cavity **26**. Side wall **30** of lid **41** is an annular ring. Outlet air plenum **36** helps facilitate the removal of heated air via outlet ventilation ducts **42.** In order to minimize the heated air exiting outlet ventilation ducts **42** from being siphoned back into inlet ventilation ducts **25,** outlet ventilation ducts **42** are azimuthally and circumferentially separated from inlet ventilation ducts **25.**

Ventilated lid **41** also comprises shear ring **47.** When lid **41** is placed atop body **21,** shear ring **47** protrudes into cavity **26,** thus, providing enormous shear resistance against lateral forces from earthquakes, impactive missiles, or other projectiles. Lid **41** is secured to body **21** with bolts (not shown) that extend therethrough.

While not illustrated, it is preferable that duct photon attenuators be inserted into all of inlet ventilation ducts **25** and/or outlet ventilation ducts **42** of underground VVO **20,** irrespective of shape and/or size. A suitable duct photon attenuator is described in United States Patent 6,519,307, Bongrazio, the teachings of which are incorporated herein by reference.

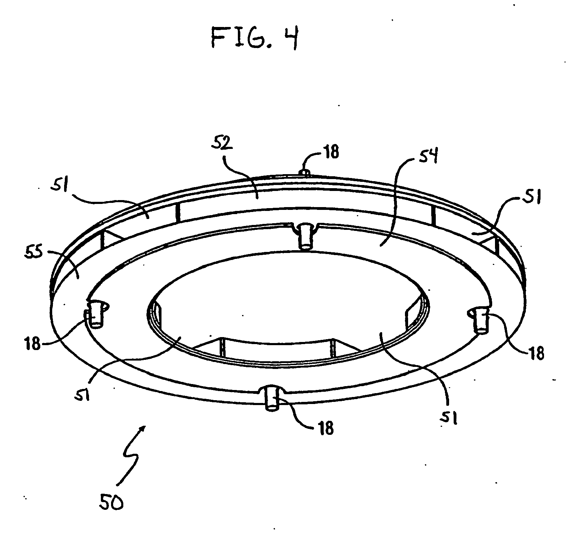

Referring now to FIG. 4, an embodiment of a lid **50** that can be used in underground VVO **20** is illustrated. Lid **50** contains similar design aspects as lid **41** and is illustrated to more fully disclose the aforementioned lid design aspects. Lid **50** has four horizontal outlet ventilation ducts **51** in side wall **52.** Shear ring **54** is provided on the bottom of lid **50** to fit into cavity **26.** Bolts **18** are used to secure lid **50** to tapped holes in the top of body **21.**

While the outlet ventilation ducts are illustrated as being located within the lid **50** of underground VVO **20,** the present invention is not so limited. For example, outlet ventilation ducts can be located in the body of the underground VVO at a location above grade. This concept is illustrated if FIGS. 8A-8E. If the outlet ventilation ducts are located in the body of the underground VVO, the openings of the outlet ventilation ducts to the ambient air can be located in the body's side walls, on its top surface, or in any other surface. Similar to when the outlet ventilation ducts are located in the lid, the outlet ventilation ducts can take on a variety of shapes and/or configurations when located in the body of the underground VVO itself. As with the inlet ventilation ducts, the outlet ventilation ducts are preferably formed by a low carbon steel liner, but can be made of any material or can be mere passageways formed into concrete body **21** or lid **41** without a lining. In all embodiments of the present invention which have both inlet and outlet ventilation ducts, it is preferred that the outlet ventilation duct openings be azimuthally and circumferentially separated from the inlets of the inlet ventilation ducts to minimize interaction between inlet and outlet air streams. There is no limitation on the shape and style of lid used in conjunction with underground VVO **20.**

Referring back to FIG. 2, soil **29** surrounds body **21** for almost the entirety of its height. When spent fuel canister **70** is positioned in cavity **26,** at least a major portion, if not the entirety, of canister **70** is below grade. Preferably, the entire height of canister **70** is below grade in order to take full advantage of the shielding effect of the soil **29.** Thus, soil **29** provides a degree of radiation shielding for spent fuel stored in underground VVO **20** that can not be achieved in above-ground overpacks. Underground VVO **20** is unobtrusive in appearance and there is no danger of underground VVO **20** tipping over. Additionally, underground VVO **20** does not have to contend with soil-structure interaction effects that magnify the free-field acceleration and potentially challenge the stability of an above ground free-standing overpack.

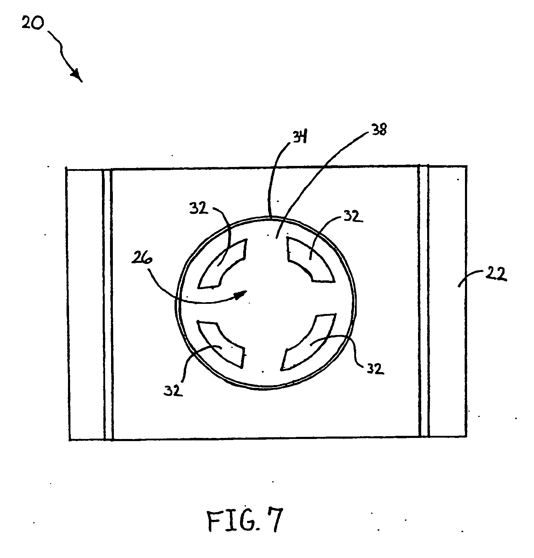

Referring to FIG. 6, area VI-VI of FIG. 2 is illustrated in detail. FIG. 6 illustrates design aspects that are important to ensure that underground VVO **20** can successfully withstand flood conditions without adverse impact. Support blocks **32** are provided on the bottom surface (formed by plate **38**) of cavity 26 so that canister **70** can be placed thereon. Support blocks **32** are circumferentially spaced from one another (shown in FIG. 7). When canister **70** is loaded into cavity **26** for storage, the bottom surface **71** of canister **70** rests on support bocks **32,** forming an inlet air plenum **33** between the bottom surface **71** of the canister **70** and the bottom surface/floor of cavity **26.** Support blocks **32** are made of low carbon steel and are preferably welded to the bottom surface of the cavity 26.

Other suitable materials of construction include, without limitation, reinforced-concrete, stainless steel, and other metal alloys.

Support blocks **32** also serve an energy/impact absorbing function. Support blocks 32 are preferably of a honeycomb grid style, such as those manufactured by Hexcel Corp., out of California, U.S.

Support blocks **32** are specifically designed so that bottom surface **71** of canister **70** is lower than top **74** of below grade outlets **28** (FIG. 2) of inlet ventilation ducts **25.** Preferably, support blocks **32** are designed so that bottom surface **71** of canister **70** is about 5.1 to 15.1 cm (2 to 6 inches) below top **74** of below grade outlets **28.** However, any desired height differential can be achieved through proper design. By supporting canister **70** in cavity **26** so that its bottom surface **71** is lower than top **74** of below grade outlets **28,** underground VVO **20** will provide adequate cooling to canister **70** under even the most adverse flood condition, which is colloquially referred to as a "smart flood." A "smart flood" is one that floods the VVO so that the water level is just high enough to block airflow though the inlet ventilation ducts **25** completely. In other words, the water level is just even with top **74** of the below grade outlets **28.**

However, underground VVO **20** can adequately deal with the "smart flood" condition because the bottom surface **71** of the canister **70** is situated at a height that is below top **74** of below grade outlets **28.** As a result, if a "smart flood" was to occur, the bottom of the canister **70** will be in contact with (i.e. submerged in) the water. Because the heat removal efficacy of water is over 100 times that of air, a wet bottom is all that is needed to effectively remove heat and keep the canister **70** cool. The deeper the submergence of canister **70** in the water, the cooler canister **70** and its contained fuel will remain. As the water in cavity **26** is heated by the bottom of canister **70,** the water evaporates, rises through cavity **26** via annular space **60,** and exits cavity **26** via the outlet ventilation ducts. Thus, the canister cooling action changes from ventilation air-cooling to evaporative water cooling.

In one embodiment, below grade outlets **28** of inlet ventilation ducts **25** will be 20.3 cm (8 inches) high by 101.6 cm (40 inches) wide and inlet air plenum **33** is 15.2 cm (6 inches) high. This provides a height differential of 2 inches.

It should be noted that the height differential design aspect of underground VVO **20** that is detailed in FIG. 6 can also be incorporated into free-standing above ground casks and VVOs to deal with "smart flood" conditions, independent of the other features of underground VVO **20.** Thus, this concept is an independent inventive aspect of the present application. When incorporated into above ground VVOs, the inlet ventilation ducts should be designed so that radiation can not escape to the surrounding environment from the inlet ventilation ducts. This is a threat because the canister will be below the inlet duct's opening into the storage cavity. In this embodiment, the inlet ventilation ducts will be shaped so that a line of sight does not exist to the canister in the storage cavity from the ambient air. For example, the inlet ventilation ducts can comprise a portion that is L-shaped, angled, S-shaped, or curved.

Moreover, while the height differential design aspect of FIG. 6 is achieved using support blocks **32,** it is also possible to practice this aspect of the invention without support blocks **32.** In such embodiments, canister **70** will be positioned in cavity **26** and rest directly on the floor of cavity **26.** However, the use of support blocks **32** is desirable because of the creation of air inlet plenum **33** and because the use of support blocks **32** helps prohibit debris and dirt from getting trapped at the bottom of cavity **26.**

Referring now to FIGS. 8A-8E, examples of alternative configurations of the outlet ventilation ducts and the inlet ventilation ducts in an underground VVO according to the present invention are schematically illustrated. Much of the detail, and some structure, has been omitted in FIGS. 8A-8E for simplicity with the understanding that any or all of the details discussed above with respect to underground VVO **20** can be incorporated therein. Like numbers are used to identify like parts with the exception of alphabetical suffixes being used for each embodiment.

It should be noted that, in addition to the configurations of the inlet ventilation ducts and the outlet ventilation ducts illustrated in FIGS. 8A-8E, a multitude of other configurations, combinations, and modifications can be incorporated into the present invention. Some of these details are discussed above. Additionally, the outlet ventilation duct configurations of any of the illustrated embodiments can be combined with any of the illustrated inlet ventilation duct configurations, and vice versa.

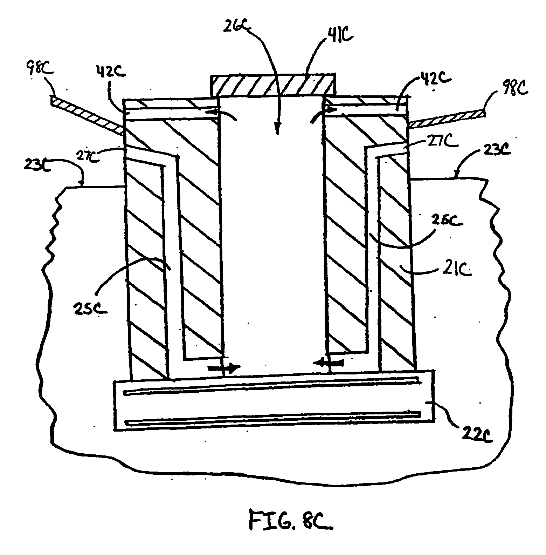

In all embodiments of the present invention, it is desirable that the heated air exiting the outlet ventilation ducts **42** be prohibited from being siphoned back into the inlet ventilation ducts **25** (i.e., keeping the warm outlet air stream from mixing with the cool inlet air stream). This can be accomplished by in a number of ways, including: (1) the positioning/placement of the inlets **27** on the underground VVO **20** with respect to the outlets of the outlet ventilation ducts **42;** providing a plate **98** or other structure that segregates the air streams (as exemplified in FIGS. 8A and 8C-8E); and/or (3) extending the inlet ventilation ducts **25** to a position away from the outlet ventilation ducts **42.**

As a result of the heat emanating from canister **70,** cool air from the ambient is siphoned into inlet ventilation ducts **25** and into the bottom of cavity **26.** This cool air is then warmed by the heat from the spent fuel in canister **70,** rises in cavity **26** via annular space **60** (FIG. 6) around canister **70,** and then exits cavity **26** as heated air via outlet ventilation ducts **42** in lid **41.**

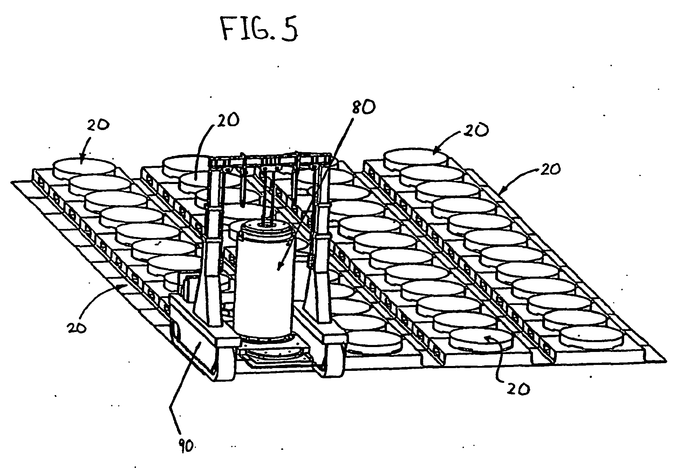

Referring now to FIGS. **5****,** ISFIs can be designed to employ any number of underground VVOs **20** (or integral structures **100**) and can be expanded in number easily to meet growing needs. Although underground VVOs **20** are closely spaced, the design permits any cavity to be independently accessed by cask crawler **90** with ease. The subterranean configuration of underground VVOs **20** greatly reduce the height of the stack structures created during loading/transfer procedures where transfer cask **80** is positioned atop underground VVO **20.**

An embodiment of a method of using underground VVO **20** to store spent nuclear fuel canister **70** will now be discussed in relation to FIGS. 2-5. Upon being removed from a spent fuel pool and treated for dry storage, spent fuel canister **70** is positioned in transfer cask **80.** Transfer cask is **80** is carried by cask crawler **90** to a desired underground VVO **20** for storage. While a cask crawler is illustrated, any suitable means of transporting transfer cask **80** to a position above underground VVO **20** can be used. For example, any suitable type of load-handling device, such as without limitation, a gantry crane, overhead crane, or other crane device can be used.

In preparing the desired underground VVO **20** to receive canister **70,** lid **41** is removed from body **21** so that cavity **26** is open. Cask crawler **90** positions transfer cask **80** atop underground VVO **20.** After transfer cask is properly secured to the top of underground VVO **20,** a bottom plate of transfer cask **80** is removed. If necessary, a suitable mating device can be used to secure the connection of transfer cask **80** to underground VVO **20** and to remove the bottom plate of transfer cask **80** to an unobtrusive position. Such mating devices are well known in the art and are often used in canister transfer procedures. Canister **70** is then lowered by cask crawler **90** from transfer cask **80** into cavity **26** of underground VVO **20** until the bottom surface of canister **70** contacts and rests atop support blocks **32,** as described above.

When resting on support blocks **32,** a major portion of the canister's height is below grade. Most preferably, the entirety of canister **70** is below grade when in its storage position. Once canister **70** is positioned and resting in cavity **26,** lid **41** is placed over cavity **26,** substantially enclosing cavity **26.** Lid **41** is oriented atop body **21** so that shear ring **47** protrudes into cavity **26** and outlet ventilation ducts **42** are azimuthally and circumferentially separated from inlet ventilation ducts **25** on body **21.** Lid **41** is then secured to body **21** with bolts. As a result of the heat emanating from canister **70,** cool air from the ambient is siphoned into inlet ventilation ducts **25** and into the bottom of cavity **26.** This cool air is then warmed by the heat from the spent fuel in canister **70,** rises in cavity **26** via annular space **60** (FIG. 6) around canister **70,** and then exits cavity **26** as heated air via outlet ventilation ducts **42** in lid **41.**

Referring now to FIG. 9, an integral structure **100** for storing spent nuclear fuel is illustrated according to an embodiment of the invention. Integral structure **100** is essentially a combination of shell **34,** inlet ventilation ducts **25,** and bottom plate **38** of underground VVO **20** without the concrete body. Integral shell **100** can be used to store canisters of spent nuclear fuel without the addition of the concrete body. Therefore, some embodiments of the present invention will be the integral structure **100** itself.

Shell **34,** bottom plate **38,** and inlet ventilation ducts **25** are preferably formed of a metal, such as low carbon steel. Other suitable materials include, without limitation, stainless steel, aluminum, aluminum-alloys, plastics, and the like.

Inlet ventilation ducts **25,** bottom plate **38,** and shell **34** are seal welded at all junctures to form a unitary structure that is hermetically sealed to the ingress water and other fluids. The only way water or other fluids can enter cavity **26** is through inlets **27** or top opening **101** of shell **34.** The height of shell **34** is designed so that a canister of spent fuel can be positioned within cavity **26** so as not to protrude from top opening **101.** There is no limitation on the height to which shell **34** can be constructed. The exact height of shell **34** will be dictated by the height of the spent fuel canister to be stored therein, the desired depth (below grade) at which the canister is to be stored, whether the outlet ventilation ducts are in the lid or integrated into the shell **34,** and/or the desired height of the outlet air plenum that is to exist during canister storage.

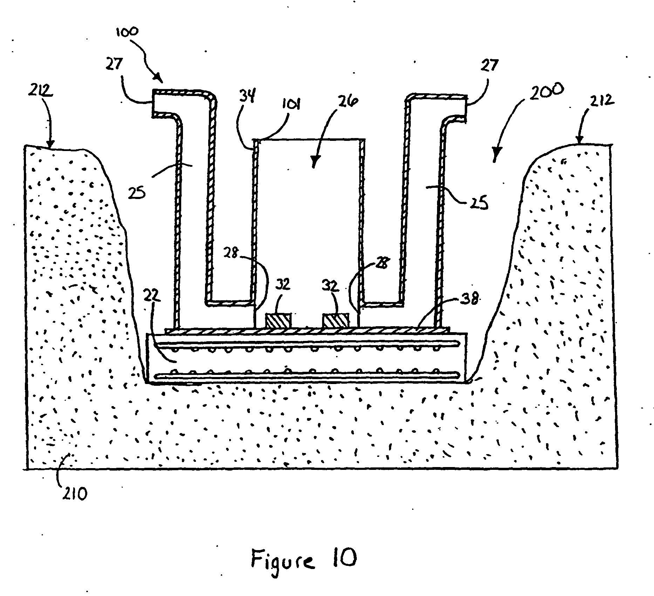

FIGS. 10-13 illustrate a process of using integral structure **100** to store a spent fuel canister at a below grade position at an ISFSI, or other location, according to one embodiment of the present invention. It should be noted that the any of the design and/or structural details discussed above with respect to underground VVO **20** can be incorporated into integral structure **100,** such as, for example, the use of vent screens, variable configurations of the inlet and outlet ducts, clearances, the use of an insulation, etc. However, in order to avoid redundancy, a discussion of these details will be omitted with the understanding that any or all of the details of underground VVO **20** are (or can be) incorporated into the storing methods and apparatus of integral structure **100,** and vice versa.

Referring to FIG. **10****,** a hole **200** is first dug into the ground **210** at a desired position within the ISFSI and at a desired depth. Once hole **200** is dug, and its bottom properly leveled, base **22** is placed at the bottom of hole **200.** Base **22** is a reinforced concrete slab designed to satisfy the load combinations of recognized industry standards, such as ACI-349. However, in some embodiments, depending on the load to be supported and/or the ground characteristics, the use of a base may be unnecessary.

[0099] Once base **22** is properly positioned in hole **200,** integral structure **100** is lowered into the hole **200** in a vertical orientation until it rests atop base **22.** Bottom plate **38** of integral structure **100** contacts and rests atop the top surface of base **22.** If desired, the bottom plate **38** can be bolted or otherwise secured to the base **22** at this point to prohibit future movement of the integral structure **100** with respect to the base **22.**

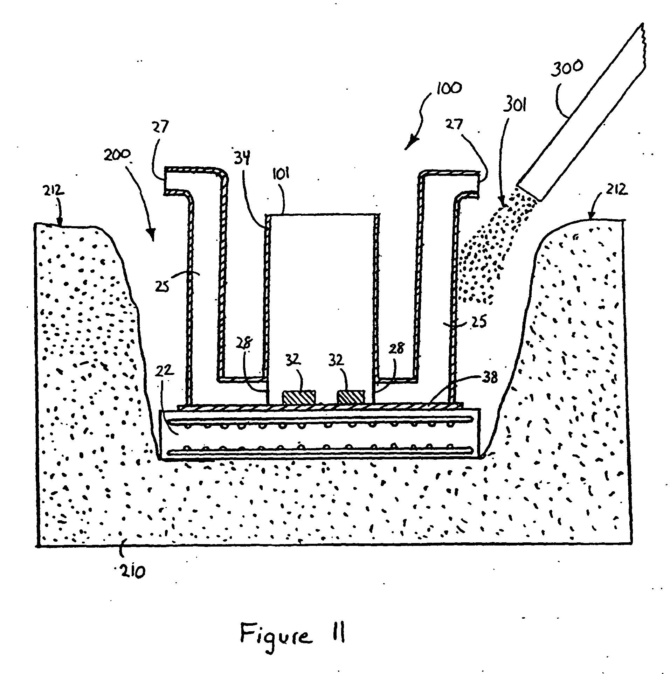

[00100] Referring to FIG. 11, once integral structure **100** is resting atop base **22** in the vertical orientation, soil supply pipe **300** is moved into position above hole **200.** Soil **301** is delivered into hole **200** exterior of integral structure **100,** thereby filling hole **200** with soil **301** and burying a portion of the integral structure **100.** While soil **301** is exemplified to fill hole **200,** any suitable engineered fill can be used that meets environmental and shielding requirements. Other suitable engineered fills include, without limitation, gravel, crushed rock, concrete and sand. Moreover, the desired engineered fill can be supplied to the hole by any means feasible, including manually or dumping.

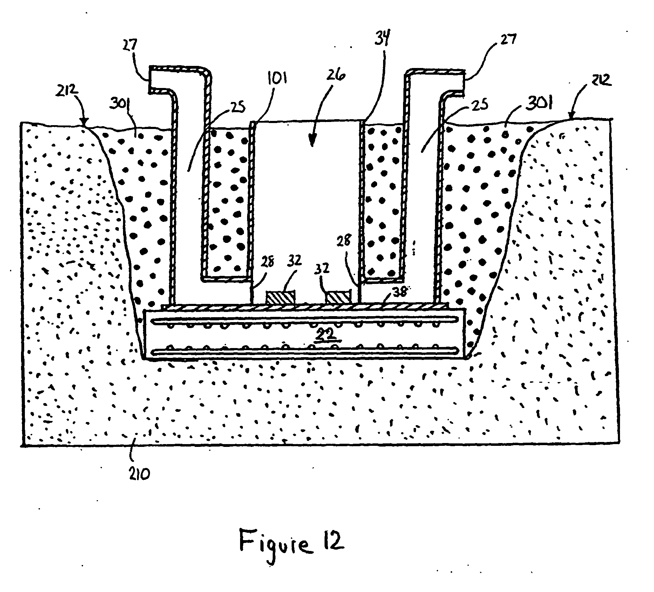

[00101] Referring to FIG. 12, soil **301** is supplied to hole **200** until soil **301** surrounds integral structure **100** and fills hole **200** to a level where soil **301** is approximately equal to ground level **212.** Soil **301** is in direct contact with the exterior surfaces of integral structure **100** that are below grade. When hole **200** is filled with soil **301,** inlets 27 of inlet ventilation ducts **25** are above grade. Shell **34** also protrudes from soil **301** so that opening **101** is slightly above grade. Therefore, because integral structure **100** is hermetically sealed at all junctures, below grade liquids and soil can not enter into cavity **26** or inlet ventilation ducts **25.** Support blocks **32** are provided at the bottom of cavity **26** for supporting a stored spent fuel canister.

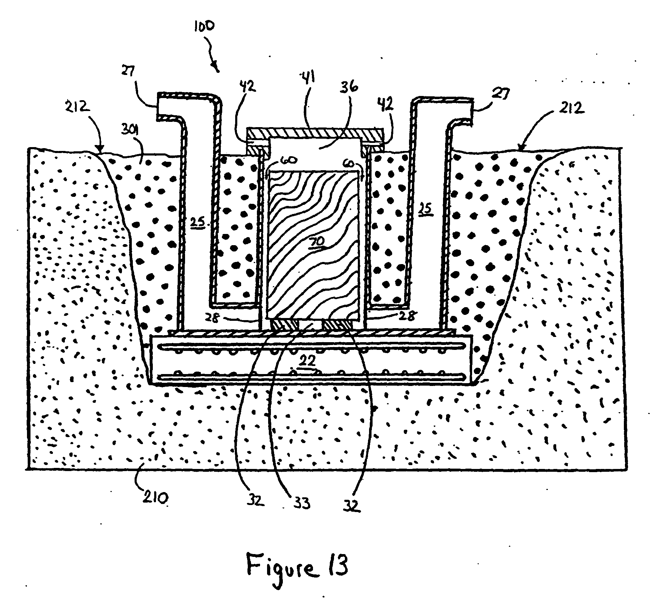

[00102] Referring to FIG. 13, once hole **200** is adequately filled with soil **301,** a canister **70** of spent fuel **70** is loaded into cavity **26** of integral structure **100.** The canister loading sequence is discussed in greater detail above with respect to FIG. 5. Canister **70** is lowered into cavity **26** until it rests on support blocks **32.** As discussed above with respect to FIG. 6, support blocks **32** and outlets **28** of integral structure **100** are specially designed to deal with "smart flood" conditions. Canister **70** rests on support blocks **32,** forming an inlet air plenum **33** between the bottom of canister **70** and the floor of cavity **26** (which in this case is bottom plate **38**).

When canister **70** is supported on support blocks **32,** the entire height of canister **70** is below ground level **212.** This maximizes use of the ground's radiation shielding capabilities. The depth at which canister **70** is below ground level **212** can be varied by increasing or decreasing the depth of hole **200.** Once canister **70** is supported in cavity **26,** lid **41** is placed atop shell **34,** thereby closing opening **101** and prohibiting radiation from escaping upwards from cavity **26.** Outlet air plenum **36** is formed between the bottom surface of lid **41** and the top of canister **70.**

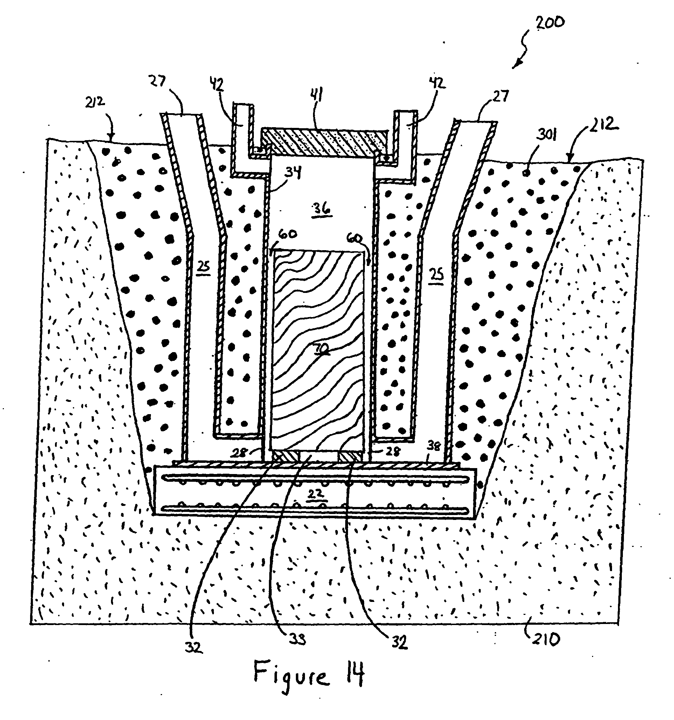

Lid **41** comprises outlet ventilation ducts **42.** Outlet ventilation ducts **42** form passageways from outlet air plenum **36,** through lid **41,** to the ambient air above ground level **212.** Outlet ventilation ducts **42** do not have to be provided in lid **41,** but can be formed as part of the integral structure 100 if desired. This will be discussed in greater detail below with respect to FIG. **14****.**

Referring still to FIG. **13****,** when integral structure **100** is used to store spent nuclear fuel canister **70,** the radiation shielding effect of the sub-grade is utilized while adequately facilitating cooling of canister **70.** The cooling of canister **70** is facilitated by cool air entering inlet ventilation ducts **25** via above grade inlets 27. The cool air travels through inlet ventilation ducts **25** until it enters cavity **26** at or near inlet air plenum **33** via below grade outlets **28.** Once the cool air is within cavity **26** it is warmed by the heat emanating from canister **70.** As the air is warmed, it travels upward along the outer surface of canister **70** via annular space **60** until the air enters outlet air plenum **36.** As the air travels upward through annular space **60** it continues to remove heat from canister **70.** The warmed air then exits cavity **26** via outlet ventilation ducts **42** and enters the ambient air. This natural convective cooling flow repeats continuously until the canister **70** is adequately cooled.

Referring now to FIG **14****,** an alternative embodiment of an integral structure **200** is illustrated. Integral structure **200** is used to store a spent fuel canister in manner similar to that of integral structure **100** discussed above. While much of the structure is identical to that of integral structure **100,** integral structure **200** further comprises outlet ventilation ducts **42** seal welded directly to shell **34.** The outlet ventilation ducts **42** can be formed out of any of the materials discussed above with respect to the inlet ventilation ducts **25.** As a result of the outlet ventilation ducts **42** being part of integral structure **200,** lid **41** can be free of such ducts. The cooling process of canister **70** remains the same.

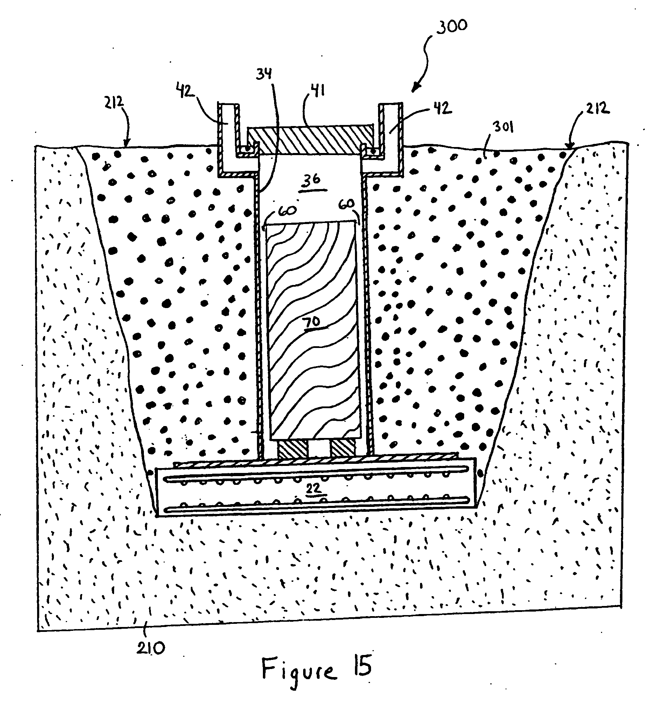

FIG. 15 illustrates an integral structure **300** according to another aspect of the present invention. Integral structure **300** is similar in many respect to that of integral structures **100** and **200** in its design and functioning. However, integral structure **300** is specifically designed to store canisters **70** holding low heat spent fuel. When a canister **70** is giving off low heat, for example in the magnitude of 2-3 kW, it is not necessary to supply inlet ventilation ducts to supply cool air to cavity **26.** Therefore, the inlet ventilation ducts are omitted from integral structure **300.** Integral structure **300** comprises only outlet ventilation ducts **42,** which act as both an inlet for the cooler air and an outlet for the warmer air.

While outlet ventilation ducts **42** of integral structure **300** are seal welded to shell **34,** it is possible for the outlet ventilation ducts to be located in the lid **41** if desired. Moreover, the concept of eliminating the inlet ventilation ducts for low heat load canister storage can be applied to any of the underground or above ground VVO embodiments illustrated in this application, specifically including underground VVO **20** and it derivatives.

While the invention has been described and illustrated in sufficient detail that those skilled in this art can readily make and use it, various alternatives, modifications, and improvements should become readily apparent without departing from the spirit and scope of the invention. Specifically, it is possible for the entire underground VVO and/or integral structure of the present invention to be below grade, so long as the inlet ventilation ducts and/or outlet ventilation ducts open to the ambient air above grade. This facilitates very deep storage of spent fuel canisters. Finally, while the invention has been described in conjunction with the storage of spent nuclear fuel, the invention is not so limited, and can be used in conjunction with the storage of any high level radioactive waste material.

Aspects and features of the present disclosure are set out in the following numbered clauses.
1. A system for storing high level radioactive waste comprising:
   a body having a cavity for receiving and storing a high level radioactive waste canister, a portion of the body positioned below grade;
   the body having at least one inlet ventilation duct extending from an above grade inlet to a below grade outlet in the cavity.
2. The system of clause 1 wherein the above grade inlet is in a side wall of the body.
3. The system of clause 2 wherein the below grade outlet is at or near a bottom of the cavity.
4. The system of clause 3 wherein the inlet ventilation duct is an elongated substantially S-shape.
5. The system of clause 1 wherein the number of inlet ventilation ducts in the body is two and the above grade inlets of the two inlet ventilation ducts are on opposing side walls of the body.
6. The system of clause 1 wherein at least a portion of the inlet ventilation duct is insulated from the body.
7. The system of clause 1 wherein at least a portion of the cavity is insulated from the body.
8. The system of clause 1 wherein the inlet ventilation duct and the cavity are hermetically sealed to the ingress of below grade liquids.
9. The system of clause 8 further comprising a metal shell lining the cavity and a metal bottom plate that forms a bottom surface of the cavity, the inlet ventilation duct being formed by a metal liner, wherein the shell, the bottom plate, and the inlet ventilation duct are welded together so as to form an integral structure.
10. The system of clause 9 wherein the body is made of concrete.
11. The system of clause 1 further comprising means to support a canister on a bottom surface of the cavity, the support means providing an air plenum between a canister of high level radioactive waste and the bottom surface of the cavity when the canister is placed in the cavity for storage.
12. The system of clause 11 wherein the support means supports the high level radioactive waste canister in the cavity so that a bottom surface of the canister is lower than a top of the below grade outlet of the inlet ventilation duct.
13. The system of clause 12 wherein the support means are one or more circumferentially spaced support blocks.
14. The system of clause 12 wherein the support means supports the high level radioactive waste canister in the cavity so that the bottom surface of the canister is at least 5.1cm (two inches) below the top of the below grade outlet.
15. The system of clause 1 further comprising a lid positioned atop the body and covering the cavity.
16. The system of clause 15 wherein when a high level radioactive waste canister is positioned in the cavity, an air plenum exists between the canister and the lid.
17. The system of clause 16 wherein the lid comprises at least one outlet ventilation duct for allowing heated air to exit the cavity, the outlet ventilation duct extending from the air plenum, through a side wall of the lid, and to an outside atmosphere.
18. The system of clause 17 wherein the outlet ventilation duct in the lid is circumferentially and azimuthally separated from the above grade inlet of the inlet ventilation duct in the body.
19. The system of clause 1 further comprising a base on which the body is positioned.
20. The system of clause 1 wherein a major portion of the body is positioned below grade.
21. The system of clause 20 wherein approximately 91.4 cm (3 feet) or less of the body's height remains above grade.
22. The system of clause 1 wherein the cavity and the inlet ventilation duct are formed by an integral steel lining and the body is formed of concrete.
23. The system of clause 1 wherein a major portion of the cavity's height is below grade.
24. The system of clause 1 further comprising at least one outlet ventilation duct for allowing heated air to exit the cavity.
25. The system of clause 1 further comprising a vent screen covering the above grade inlet of the inlet ventilation duct; a lid positioned atop the body and covering the cavity so that when a high level radioactive waste canister is in the cavity an outlet air plenum exists between the canister and the lid; a base on which the body is positioned; at least one outlet ventilation duct forming a passageway from the outlet air plenum to an outside atmosphere above grade, the outlet ventilation duct being circumferentially and azimuthally separated from the above grade inlet of the inlet ventilation duct in the body; a metal shell lining the cavity; a metal bottom plate forming a bottom surface of the cavity; the inlet ventilation duct being formed by a metal liner, the shell, the bottom plate, and the inlet ventilation duct being welded together so as to form an integral structure that is hermetically sealed to the ingress of below grade liquids; wherein the below grade outlet is at or near a bottom of the cavity; means to support the canister on a bottom surface of the cavity, the support means providing an inlet air plenum between a canister of high level radioactive waste and the bottom surface of the cavity when the canister is placed in the cavity for storage; wherein the support means supports the high level radioactive waste canister in the cavity so that a bottom surface of the canister is lower than a top of the below grade outlet of the inlet ventilation duct; wherein a major portion of the body is below grade; and wherein a major portion of the cavity's height is below grade.
26. A method of storing high level radioactive waste comprising:
   providing a system according to clause 1, the system further comprising at least one outlet ventilation duct for allowing heated air to exit the cavity;
   lowering a high level radioactive waste canister into the cavity so that a major portion of the canister is below grade; and
   placing a lid atop the body so as to enclose the cavity;
   wherein ventilation of the canister is provided by cold air entering the cavity through the inlet ventilation duct in the body, the cold air being heated within the cavity by the high level radioactive waste, and warm air exiting the cavity through the outlet ventilation duct.
27. A system for storing high level radioactive waste comprising:
   a structure forming a cavity for receiving and storing a high level radioactive waste canister, the cavity having a top, a bottom, and a bottom surface;
   at least one inlet ventilation duct forming a passageway from an ambient air inlet to an outlet at or near the bottom of the cavity;
   at least one outlet ventilation duct forming a passageway from at or near the top of the cavity to ambient air; and
   means to support a high level radioactive waste canister in the cavity so that the bottom surface of the canister is lower than a top of the outlet;
   wherein the inlet ventilation duct is shaped so that a line of sight does not exist to the cavity from the ambient air inlet.
28. The system of clause 27 wherein a major portion of the body is positioned below grade, the ambient air inlet of the inlet ventilation duct being above grade and the outlet of the inlet ventilation duct being below grade.
29. The system of clause 27 wherein both the ambient air inlet and the outlet of the inlet ventilation duct are above grade, the inlet ventilation duct being shaped so that a line of sight does not exist to a canister supported by the support means from the ambient air inlet.
30. The system of clause 29 wherein the inlet ventilation duct comprises a portion that is L-shaped, angled, S-shaped, or curved.
31. The system of clause 27 wherein the support means supports the high level radioactive waste canister in the cavity so that the bottom surface of the canister is at least 5.1 cm (two inches) below the top of the outlet.
32. A system for storing high level radioactive waste comprising:
   a shell forming a cavity for receiving a canister of high level radioactive waste, at least a portion of the shell positioned below grade; and
   at least one inlet ventilation duct extending from an above grade inlet to a below grade outlet at or near a bottom of the cavity;
   the inlet ventilation duct connected to the shell so that the cavity is hermetically sealed to ingress of below grade fluids.
33. The system of clause 32 further comprising at least one outlet ventilation duct forming a passageway from at or near the top of the cavity to an ambient atmosphere.
34. The system of clause 33 further comprising a lid secured to a top of the shell, the lid comprising the at least one outlet ventilation duct.
35. The system of clause 32 further comprising a bottom plate, wherein the bottom plate, the shell, and the inlet ventilation ducts form an integral structure hermetically sealed to ingress of below grade fluids.
36. The system of clause 32 wherein the shell and the inlet ventilation duct are constructed of steel and seal welded together.
37. The system of clause 32 further comprising a base positioned below grade, the shell and inlet ventilation duct positioned atop the base.
38. A method of storing high level radioactive waste comprising:
   providing a below grade hole;
   providing a system comprising a shell forming a cavity for receiving a canister of high level radioactive waste, at least a portion of the shell positioned below grade, and at least one inlet ventilation duct extending from an inlet to an outlet at or near a bottom of the cavity, the inlet ventilation duct connected to the shell;
   positioning the apparatus in the hole so that the inlet of the inlet ventilation duct is above grade and the outlet of the inlet ventilation duct into the cavity is below grade;
   filling the hole with engineered fill; and
   lowering a high level radioactive waste canister into the cavity.
39. The method of clause 38 wherein a major portion of the shell is below grade.
40. The method of clause 39 further comprising placing a lid on a top of the shell, the lid comprising at least one outlet ventilation duct forming a passageway from at or near the top of the cavity to an ambient atmosphere.
41. The method of clause 40 further comprising cool air entering the cavity via the inlet ventilation duct, the cool air being warmed by heat from the canister, and warm exiting the cavity via the outlet ventilation duct.
42. A system for storing high level radioactive waste having a low heat load comprising:
   a structure forming a cavity for receiving a canister of high level radioactive waste, at least a portion of the cavity being positioned below grade; and
   at least one ventilation duct forming a passageway from at or near the top of the cavity to an ambient atmosphere;
   wherein the cavity is hermetically sealed to ingress of below grade fluids.
43. The system of clause 42 wherein the structure is a steel shell or a concrete body.
44. The system of clause 43 wherein the structure is a steel shell, the system further comprising a concrete body surrounding the shell.
45. The system of clause 42 free of ventilation ducts at or near a bottom of the cavity.
46. The system of clause 42 wherein the structure is a shell; the system further comprising a concrete body surrounding the shell; means for insulating the shell from the concrete body; a lid secured to a top of the shell, the lid comprising the at least one ventilation duct; a bottom plate, wherein the bottom plate and the shell form an integral structure; a base positioned below grade, the shell and bottom plate positioned atop the base; a canister of high level radioactive waste positioned in the cavity, the shell positioned sufficiently below grade so that the entire canister is below grade; an air plenum being created between the lid and the canister, the at least one ventilation duct forming a passageway from the air plenum to an ambient atmosphere; one or more support blocks located on a floor of the cavity, the support blocks creating a second air plenum between a canister of high level radioactive waste and a bottom surface of the cavity when a canister is placed in the cavity for storage; the system being free of ventilation ducts at or near a bottom of the cavity; wherein the shell is constructed of steel; wherein a small clearance exists between the canister walls and the shell; and wherein the small clearance is within the range of 2.5 to 7.6cm (1-3 inches).
47. A method of storing high level radioactive waste having a low heat load comprising:
   providing the system of clause 42;
   lowering a canister of low heat high level radioactive waste into the cavity until at least a major portion of the canister is below grade; and
   supporting the canister in the cavity.
48. The method of clause 47 wherein the entire canister is below grade when positioned in the cavity.
49. The method of clause 48 further comprising:
   cool air entering the cavity via the at least one ventilation duct;
   the cool air being warmed by heat emanating from the canister; and
   warm air exiting the cavity via the at least one ventilation duct.
50. A method of storing high level radioactive waste comprising:
   providing a system comprising a structure forming a cavity for receiving and storing a high level radioactive waste canister, the cavity having a top, a bottom, and a bottom surface, at least one inlet ventilation duct forming a passageway from an ambient air inlet to an outlet at or near the bottom of the cavity; and at least one outlet ventilation duct forming a passageway from at or near the top of the cavity to ambient air;
   lowering a canister loaded with high level radioactive waste into the cavity until a bottom surface of the canister is lower than a top of the outlet of the at least one inlet ventilation duct; and
   supporting the canister in the cavity in a position where the bottom surface of the canister is lower than the top of the outlet of the at least one inlet ventilation duct.

## Claims

1. A system for storing high level radioactive waste comprising:
a body forming a cavity having a top, a bottom, and a bottom surface;
a removable lid positioned atop the body to enclose the cavity;
at least one inlet ventilation duct forming a passageway from an ambient air inlet to an outlet that opens into the cavity at or near the bottom of the cavity;
at least one outlet ventilation duct forming a passageway from at or near the top of the cavity to ambient air; and
a high level radioactive waste canister positioned in the cavity so that the bottom surface of the canister is lower than a top of the outlet;
wherein the inlet ventilation duct is shaped so that a line of sight does not exist to the cavity from the ambient air inlet.

2. The system of claim 1 wherein a major portion of the body is positioned below grade, the ambient air inlet of the inlet ventilation duct being above grade and the outlet of the inlet ventilation duct being below grade.

3. The system of claim 1 wherein both the ambient air inlet and the outlet of the inlet ventilation duct are above grade, the inlet ventilation duct being shaped so that a line of sight does not exist to a canister supported by the support means from the ambient air inlet.

4. The system of claim 3 wherein the inlet ventilation duct comprises a portion that is L-shaped, angled, S-shaped, or curved.

5. The system of claim 3 wherein the support means supports the high level radioactive waste canister in the cavity so that the bottom surface of the canister is at least 5 cm (two inches) below the top of the outlet of the inlet ventilation duct.

6. A method of storing high level radioactive waste comprising:
providing a system comprising a body structure forming a cavity for receiving and storing a high level radioactive waste canister, the cavity having a top, a bottom, and a bottom surface, at least one inlet ventilation duct forming a passageway from an ambient air inlet to an outlet that opens into the cavity at or near the bottom of the cavity, the inlet ventilation duct shaped so that a line of sight does not exist to the cavity from the ambient air inlet; and at least one outlet ventilation duct forming a passageway from at or near the top of the cavity to ambient air;
lowering a canister loaded with high level radioactive waste into the cavity until a bottom surface of the canister is lower than a top of the outlet of the at least one inlet ventilation duct;
supporting the canister in the cavity in a position where the bottom surface of the canister is lower than the top of the outlet of the at least one inlet ventilation duct;
placing a removable lid atop the body to enclose the cavity; and
cool air entering the cavity via the inlet ventilation duct, the cool air traveling upward along the outer surface of the high level radioactive waste canister and
being warmed by heat from the canister, and warm exiting the cavity via the outlet ventilation duct.

7. The system of claim 1 wherein when the removable lid is atop the body and a canister is positioned in the cavity, an outlet air plenum is formed between a top surface of canister and the removable lid, the outlet ventilation duct forming a passageway from the outlet air plenum to the ambient air.

8. The system of claim 7 wherein the outlet ventilation duct is located within the removable lid.

## Patentansprüche

1. System zum Lagern von hoch radioaktivem Abfall, umfassend:
einen Körper, der einen Hohlraum bildet und eine Oberseite, einen Boden und eine Bodenfläche hat; einen abnehmbaren Deckel, der sich auf dem Körper befindet, um den Hohlraum einzuschließen;
mindestens einen Einlassbelüftungskanal, der einen Durchlass von einem Umgebungslufteinlass zu einem Auslass bildet, welcher sich in den Hohlraum bei oder in der Nähe des Hohlraumbodens öffnet;
mindestens einen Auslassbelüftungskanal, der einen Durchlass vom oberen Teil des Hohlraums oder in der Nähe desselben zur Umgebungsluft bildet; und
einen Kanister für hoch radioaktiven Abfall, der im Hohlraum positioniert ist, so dass die Bodenfläche des Kanisters tiefer als eine Oberkante des Auslasses liegt;
wobei der Einlassbelüftungskanal so geformt ist, dass es keine Sichtlinie vom Umgebungslufteinlass zum Hohlraum gibt.

2. System nach Anspruch 1, wobei ein größerer Teil des Körpers unter der Erdoberfläche liegt, der Umgebungslufteinlass des Einlassbelüftungskanals über der Erdoberfläche liegt und der Auslass des Einlassbelüftungskanals unter der Erdoberfläche liegt.

3. System nach Anspruch 1, wobei der Umgebungslufteinlass und der Auslass des Einlassbelüftungskanals über der Erdoberfläche liegen, der Einlassbelüftungskanal so geformt ist, dass eine Sichtlinie vom Umgebungslufteinlass zu einem Kanister, der vom Abstützungsmittel getragen wird, nicht vorhanden ist.

4. System nach Anspruch 3, wobei der Einlassbelüftungskanal einen Abschnitt umfasst, der L-förmig, abgewinkelt, S-förmig oder gekrümmt ist.

5. System nach Anspruch 3, wobei das Abstützungsmittel den Kanister mit hoch radioaktivem Abfall im Hohlraum trägt, so dass die Bodenfläche des Kanisters mindestens 5 cm unter der Oberkante des Auslasses des Einlassbelüftungskanals liegt.

6. Verfahren zum Lagern von hoch radioaktivem Abfall, umfassend:
Vorsehen eines Systems, das eine Körperstruktur enthält, welche einen Hohlraum zum Aufnehmen und Lagern eines Kanisters mit hoch radioaktivem Abfall bildet, wobei der Hohlraum eine Oberseite, einen Boden und eine Bodenfläche hat, wobei mindestens ein Einlassbelüftungskanal einen Durchlass von einem Umgebungslufteinlass zu einem Auslass bildet, welcher sich bei oder in der Nähe des Bodens des Hohlraums in den Hohlraum öffnet, der Einlassbelüftungskanal so geformt ist, dass es keine Sichtlinie vom Umgebungslufteinlass zum Hohlraum gibt; und mindestens einen Auslassbelüftungskanal, der einen Durchlass vom oberen Teil des Hohlraums oder in der Nähe desselben zur Umgebungsluft bildet;
Absenken eines Kanisters, der mit hoch radioaktivem Abfall beladen ist, in den Hohlraum, bis eine Bodenfläche des Kanisters tiefer als eine Oberkante des Auslasses des mindestens einen Einlassbelüftungskanals liegt;
Abstützen des Kanisters im Hohlraum in einer Position, in der die Bodenfläche des Kanisters tiefer als die Oberkante des Auslasses des mindestens einen Einlassbelüftungskanals liegt; Platzieren eines abnehmbaren Deckels auf dem Körper, um den Hohlraum abzuschließen; und
Einlassen von Kühlluft über den Einlassbelüftungskanal, wobei die Kühlluft entlang der Außenfläche des Kanisters mit hoch radioaktivem Abfall strömt und von der Wärme aus dem Kanister erwärmt wird und warm den Hohlraum über den Auslassbelüftungskanal verlässt.

7. System nach Anspruch 1, wobei, bei Positionierung des abnehmbaren Deckels auf dem Körper und eines Kanisters im Hohlraum, ein Auslassluftplenum zwischen einer Oberseite des Kanisters und dem abnehmbaren Deckel gebildet ist, wobei der Auslassbelüftungskanal einen Durchlass vom Auslassluftplenum zur Umgebungsluft bildet.

8. System nach Anspruch 7, wobei sich der Auslassbelüftungskanal innerhalb des abnehmbaren Deckels befindet.

## Revendications

1. Système de stockage de déchets radioactifs à activité élevée comprenant :
un corps formant une cavité présentant une partie supérieure, une partie inférieure et une surface inférieure ;
un couvercle amovible positionné en haut du corps pour entourer la cavité ;
au moins une conduite de ventilation d'entrée formant un passage d'une entrée d'air ambiant à une sortie s'ouvrant dans la cavité au niveau ou près de la partie inférieure de la cavité ;
au moins une conduite de ventilation de sortie formant un passage partant de ou à proximité de la partie supérieure de la cavité vers l'air ambiant ; et
un fût de déchets radioactifs à activité élevée positionné dans la cavité, de sorte que la surface inférieure du fût soit plus basse qu'une partie supérieure de la sortie ;
la conduite de ventilation d'entrée étant façonnée de sorte qu'il n'y ait aucune visibilité directe de la cavité à partir de l'entrée d'air ambiant.

2. Système selon la revendication 1, une grande partie du corps étant positionnée au-dessous du niveau du sol, l'entrée d'air ambiant de la conduite de ventilation d'entrée se situant au-dessus du niveau du sol et la sortie de la conduite de ventilation d'entrée se situant au-dessous du niveau du sol.

3. Système selon la revendication 1, l'entrée d'air ambiant et la sortie de la conduite de ventilation d'entrée se situant au-dessus du niveau du sol, la conduite de ventilation d'entrée étant formée de sorte qu'il n'y ait aucune visibilité directe d'un fût porté par le moyen de support à partir de l'entrée d'air ambiant.

4. Système selon la revendication 3, la conduite de ventilation d'entrée comprenant une partie en forme de L, coudée, en forme de S ou courbée.

5. Système selon la revendication 3, le moyen de support portant le fût de déchets radioactifs à activité élevée dans la cavité, de sorte que la surface inférieure du fût se situe au moins à 5 cm (deux pouces) au-dessous de la partie supérieure de la sortie de la conduite de ventilation d'entrée.

6. Procédé de stockage de déchets radioactifs à activité élevée comprenant les étapes consistant à :
fournir un système comprenant une structure de corps formant une cavité destinée à recevoir et à stocker un fût pour déchets radioactifs à activité élevée, la cavité présentant une partie supérieure, une partie inférieure et une surface inférieure, au moins une conduite de ventilation d'entrée formant un passage d'une entrée d'air ambiant à une sortie s'ouvrant dans la cavité au niveau ou près de la partie inférieure de la cavité, la conduite de ventilation d'entrée étant formée de sorte qu'il n'existe aucune visibilité directe de la cavité à partir de l'entrée d'air ambiant, et au moins une conduite de ventilation de sortie formant un passage partant de ou à proximité de la partie supérieure de la cavité vers l'air ambiant ;
abaisser un fût chargé de déchets radioactifs à activité élevée dans la cavité jusqu'à ce qu'une surface inférieure du fût soit plus basse qu'une partie supérieure de la sortie de la ou des conduites de ventilation d'entrée ;
placer le fût dans la cavité dans une position dans laquelle la surface inférieure du fût est plus basse que la partie supérieure de la sortie de la ou des conduites de ventilation ;
placer un couvercle amovible en haut du corps pour entourer la cavité ; et
l'air frais pénétrant dans la cavité par le biais de la conduite de ventilation d'entrée, l'air frais se déplaçant vers le haut le long de la surface extérieure du fût de déchets radioactifs à activité élevée et étant chauffé par la chaleur provenant du fût, et la chaleur quittant la cavité par la conduite de ventilation de sortie.

7. Système selon la revendication 1, un plénum d'air de sortie étant formé entre une surface supérieure du fût et le couvercle amovible lorsque le couvercle amovible se situe en haut du corps et qu'un fût est positionné dans la cavité, la conduite de ventilation de sortie formant un passage du plénum d'air de sortie à l'air ambiant.

8. Système selon la revendication 7, la conduite de ventilation de sortie étant située dans le couvercle amovible.
